# EUROPEAN PATENT APPLICATION

(11) **EP 4 725 615 A1**
(43) Date of publication of application: **15.04.2026**
(21) Application number: 25200514.5
(22) Date of filing: 05.09.2025
(51) Int. Cl.: B05B 1/20

(54) **WATER DELIVERY APPARATUS**

(30) Priority: 03.10.2024 GB 202414534
(71) Applicant: Ørsted Wind Power A/S, 7000 Fredericia (DK)
(72) Inventor: ALMOND, James John, London SW1P 1WG (GB)
(74) Representative: Lewis Silkin LLP

(57) **Abstract**

A water delivery apparatus 100 for an offshore structure 10 comprises a hose 102 comprising a water inlet 120 towards a first end of the hose 102; a pump 140 located along the hose 102 and configured to be switched between an on state and an off state; a plurality of nozzles 150 distributed along the hose 102 for delivering high pressure water; and a controller 180 configured to switch the water delivery apparatus 100 between a standby mode and a ready mode. When the water delivery apparatus 100 is in the ready mode, the controller 180 is controllable to control the pump 140 to switch between the on state and the off state. When the water delivery apparatus 100 is in standby mode, the controller 180 is controllable to control the pump 140 to switch to the off state. Wherein in the on state, the pump 140 is configured to draw water through the water inlet 120 to deliver said water to the plurality of nozzles 150 and wherein the plurality of nozzles 150 are positioned such that the delivered water cleans at least part of said offshore structure 10.

## Description

### FIELD

The present invention relates to a water delivery apparatus for an offshore structure and method thereof.

### BACKGROUND

Access to an offshore structure, for example an offshore wind turbine, may be gained by climbing a ladder attached to a transition piece such as the monopile of a wind turbine. Both the ladder and the transition piece are frequently used by offshore workers to access, service and maintain said offshore structure.

A growing problem in offshore structures is the build-up of bird droppings (guano). Birds roost and loaf on fixed structures at sea, including offshore wind turbines. If the guano is left to accumulate, they can harden and adhere to the surfaces of the offshore structure.

This is a particular issue on the parts used for access by offshore workers. Excessive amounts of bird guano pose health and safety issues as well as impacting the morale of offshore workers. That is, the bird guano will cause the affected areas to become extremely slippery, creating additional hazards when using the ladders, moving around the transition piece or accessing other platforms such as helipads. Furthermore, the bird guano produces an unpleasant sight and smell, is unhygienic and may carry disease. Finally, in areas such as ladders and helipads, markings may be obscured, which can lead to dangerous landing conditions.

The presence of birds not only causes issues on the access ways of the offshore structure but may also lead to bird guano and/or bird feathers clogging the air intake that cools the electrical systems of the turbine. This may cause systems to overheat, resulting in faulted and/or stopped turbines.

Current solutions to this problem are generally split into two categories: (a) frequent cleaning to avoid build-up of bird guano, and (b) bird deterrent methods.

Cleaning of affected areas of offshore structures is routinely used to remove bird guano and improve the safety for offshore workers. Cleaning techniques may include manual cleaning by contractors. The cleaning may be required each time before an offshore crew accesses the offshore structure. Frequent cleaning of the offshore structures can cause a significant financial burden and time costs, especially if this delays access for a crew that is responding to a fault or safety concern. Cleaning may also need to be performed by the technicians responding to the fault or those carrying out regular maintenance work; thereby detracting resources from the maintenance of the turbines.

Bird deterrent methods include proofing, scaring or control. By deterring birds from the area, the build-up of guano may be reduced.

Proofing may involve completely excluding birds from an area (e.g. by using netting). This option is often not viable or practical due to offshore weather conditions. That is, proofing measures will often be displaced or destroyed by offshore conditions. In addition, some species of birds may break and wear away the proofing, leaving it in a non-functional state.

Scaring may involve physical deterrents such as bird spikes and bird-of-prey kites or behavioural deterrents such as acoustic or electric devices. The aim of these deterrents is to alter the birds' behavioural patterns, such that they learn to avoid the area. Current scaring methods are either not effective enough or deemed to be too inhumane to the birds. In addition, it has been shown that birds may adapt and become resistant to deterrents, such as scarecrows.

Finally, control may involve lethal methods (such as shooting), which are not only dangerous and difficult to achieve offshore but are unnecessary and often inhumane. In addition, in some areas of offshore structures, the birds are endangered or protected species, and therefore control is not an option.

In summary, bird guano has been recognised as a widespread problem across existing offshore industries for many years. The current methods of cleaning or prevention have had mixed success, and no solution has been wholly successful. Therefore, a new solution to this problem is needed.

It is the objective of the present disclosure to overcome some of the above-mentioned problems.

### SUMMARY

According to the present invention there is provided an apparatus and method as set forth in the claims. Other features of the invention will be apparent from the dependent claims, and the description which follows.

According to a first example, there is provided a water delivery apparatus for an offshore structure, the apparatus comprising a hose comprising a water inlet towards a first end of the hose; a pump located along the hose configured to be switched between an on state and an off state; a plurality of nozzles distributed along the hose for delivering water; and a controller configured to switch the water delivery apparatus between a standby mode and a ready mode. When the water delivery apparatus is in the ready mode, the controller is controllable to control the pump to switch between the on state and the off state. When the water delivery apparatus is in standby mode, the controller is controllable to control the pump to switch to the off state. In the on state, the pump is configured to draw water through the water inlet to deliver said water to the plurality of nozzles. The plurality of nozzles are positioned such that the delivered water cleans at least part of said offshore structure.

The above invention provides a water delivery apparatus with improved cleaning ability of an offshore structure. The apparatus is capable of automatically cleaning key areas of an offshore structure without the need for manual cleaning. The apparatus also prevents the build-up of bird guano by being activatable at various times of day and night, every day of the year. The apparatus is also minimally invasive to birds, pollution free and helps to alleviate interruptions to operations. The apparatus will function regardless of sea conditions, thus lack of access due to rough seas is not a problem. The apparatus requires minimal maintenance and is cheaper to run than existing systems. By reducing the build-up of bird guano, the working conditions for offshore technicians are dramatically improved and more easily maintained.

In addition, because the offshore structure access points will stay clear of bird guano, more immediate access can be granted to crews, without having to send in a cleaning crew first. This reduces downtime of the offshore structure (for example a wind turbine) and therefore allows for increased energy production. Finally, costly hiring of cleaning crews and designated vessels is no longer required.

The apparatus may be permanently installed on offshore structures, drawing water from the sea and cleaning walkways and ladders on access areas of said structures. Therefore, birds are deterred from landing on said structures, and excess bird guano is cleaned on a regular basis.

The pump may be located towards or at the first end of the hose.

The water delivery apparatus may further comprise a temperature sensor. The controller may be configured to switch the water delivery apparatus to the standby mode, based on the temperature sensor sensing a temperature below a predetermined level. The controller may be configured to switch the water delivery apparatus to the ready mode, based on the temperature sensor sensing a temperature above a predetermined level.

The temperature sensor advantageously inhibits the operations of the apparatus and the spraying of water, thereby preventing ice from forming on the walkways of the offshore structure, thus preventing safety hazards. It also protects the apparatus from operating under conditions where there is a risk that ice may form internally within the various components; therefore, providing a more reliable and robust system.

The water delivery apparatus may further comprise a float switch configured to detect when a sea level is above or below a pre-determined threshold. The controller may be configured to, in response to the float switch detecting that the sea level is above a predetermined threshold, control the water delivery apparatus to be in the ready mode. The controller is configured to, in response to the float switch detecting that the sea level is below a predetermined threshold, control the water delivery apparatus to be in the standby mode.

The float switch ensures that the pump is fully submerged before being activated, therefore reducing the risk of damage to the pump and improving the robustness of the system.

The controller may be configured to receive, or be pre-loaded with, local tide information. The controller may be configured to, in response to local tide information indicating that the sea level is above a predetermined threshold, control the water delivery apparatus to be in the ready mode. The controller may be configured to, in response to the local tide information indicating that the sea level is below a predetermined threshold, control the water delivery apparatus to be in the standby mode.

When the pump is in the on state, the controller may be configured to automatically control the pump to switch to the off state in response the water delivery apparatus switching from the ready mode to the standby mode.

This advantageously prevents the apparatus, and the pump, from functioning when the conditions are not suitable; for example, at low tide, at low temperatures, or when crew are approaching or are located at the offshore structure.

When the pump is switched to the on state, the controller may be configured to start a timer, and, when the timer reaches a predetermined time, the controller is configured to control the pump to switch from the on state to the off state.

This advantageously ensures that the apparatus is only running for the required amount of time each day or during each cycle. This ensures that the offshore structure is sufficiently cleaned and will not interrupt access to the offshore structure.

When the water delivery apparatus is in the ready mode, the controller may be configured to control the pump to periodically switch between the on state and the off state.

The apparatus may automatically activate at set intervals, thus ensuring bird guano does not build up on the offshore structure.

The controller may be remotely controlled. This advantageously allows the water delivery apparatus to be activated and deactivated remotely, for example if extra cleaning is needed, or if access to the structure is required immediately.

When the water delivery apparatus is in the ready mode, the controller may be configured to control the pump to switch between the on state and the off state based on an external signal.

The apparatus may advantageously be activated (or deactivated) manually, for example prior to the arrival of a crew, or if there has been a larger volume of birds sighted in the area recently.

When the water delivery apparatus is in the ready mode, the controller may be configured to control the pump to switch between the on state and the off state based on the current time.

This may advantageously allow the water delivery apparatus to be run only at, for example, nighttime. That is, the apparatus may not interfere or hinder crews working on the structure. Furthermore, because the apparatus will likely be running outside of personnel access hours, the apparatus can draw power from an existing supply on the offshore structure, as features such as internal lights will not require power at this time.

The water delivery apparatus may further comprise a motion detector configured to detect the presence of an animal, such as a person or a bird. The controller may be configured to control the pump to switch between the on state and the off state based on the detection of an animal by the motion detector.

The motion detector helps to provide an apparatus that is a dual cleaning and bird deterrent system. The deterrent system has a reduced risk to birds and prevents some build-up of guano. Additionally, since the motion detector can prevent the pump from being in the on state when an animal is present, the safety of the crew and birds are enhanced.

The water delivery apparatus may further comprise an indicator to indicate whether the water delivery apparatus is in the standby mode or the ready mode, and whether the pump is in the on state or the off state.

The indicator may advantageously give a visual signal to a crew to determine whether a structure is safe to approach, the apparatus needs to be deactivated, or if the apparatus is in a state ready to be manually activated.

The water delivery apparatus may further comprise a one-way valve located along the hose. The one-way valve may comprise a drainage hole configured to allow water to flow out of the apparatus in accordance with gravity when the pump is in the off state.

The one-way valve with a drainage hole prevents water from being sat in the hose and other parts of the apparatus, thus reducing the risk of salt damage or issues caused by freezing during low temperatures as well as the likelihood of living organisms developing within the apparatus during down time. This feature also reduces the risk of damage to the pump.

At least one or more of the plurality of nozzles are located at or above a platform of the offshore structure and positioned such that the high-pressure water is delivered to a floor and/or railings of said platform.

The nozzles advantageously clean the offshore structure and deter birds from landing and/or nesting. The nozzles are also suitable for offshore conditions, with minimal moving parts, and thus are less prone to damage.

The plurality of nozzles may comprise one or more lower nozzles and one or more upper nozzles. The one or more lower nozzles may be located at or towards a first stage platform of the offshore structure. The one or more upper nozzles may be located at or towards a second stage platform of the offshore structure.

The upper and lower nozzles may advantageously clean different areas of the offshore structure, such as different access areas or platforms at different heights.

The spray angle of each of the plurality of nozzles may be between 45 and 135 degrees, preferably between 60 and 110 degrees, more preferably between 70 and 90 degrees.

The spray angle of the nozzles advantageously sprays as much of the offshore structure as possible, thus providing a better cleaning service. The angle also ensures some overlap between the spray of the nozzles, therefore ensuring no areas that remain uncleaned.

The plurality of nozzles may be positioned such that the high-pressure water from at least one of the plurality of nozzles overlaps with the high-pressure water from at least one other of the plurality of nozzles.

This feature advantageously ensures maximum and complete coverage of the apparatus, thus providing an increased cleaning and deterrent efficacy. Furthermore, the overlapping spray pattern allows for targeted and enhanced cleaning of specific areas known or prone to be more contaminated, thereby improving the overall performance of the system.

Each of the plurality of nozzles may comprise an outlet configured to produce one of a circular, conical, or spiral shaped spray.

The shape of the spray may advantageously cover a large area of the offshore structure. The type of nozzles may be less prone to failure due to their fixed structure.

The hose may comprise a lower section and an upper section. The lower section of the hose may be encased in a protective casing.

The protective casing advantageously protects the components from adverse sea states and helps reduce sunlight on said components of the apparatus, such as the pump. This reduces marine growth and increases the longevity of the apparatus.

The offshore structure may be an offshore wind turbine. The offshore wind turbine may comprise a transition piece and a monopile body. At least a section of hose may be attached to the transition piece, and at least a section of the hose may be attached to the monopile body.

The positioning of the hose may ensure that the nozzles have maximum coverage, thus keeping the access walkways and handrails of the turbine clean and safe to use.

The water inlet may comprise an inlet section. The inlet section may comprise a plurality of apertures sized to allow the ingress of water and prevent the ingress of unwanted material.

The water inlet allows water to enter the apparatus while stopping large foreign objects such as living organisms, and particulates such as silt.

Each of the plurality of apertures may have a diameter of between 0.5mm and 10mm, preferably between 1mm and 5mm, more preferably between 2mm and 4mm, most preferably 3mm.

The sizing of the apparatus may further improve the efficacy of the inlet to stop matter other than water entering the system.

The water inlet may comprise a cleaning device configured to prevent the build-up of aggregates on the inlet section.

The cleaning device may advantageously stop marine growth growing on the inlet section, thus ensuring that the flow of water remains free and open.

The water inlet may comprise: a hose connection end for connection of the hose, a distal end, a hose end stopper positioned towards the host connection end and at one end of the inlet section, and a distal end stopper positioned towards the distal end and at one other end of the inlet section. The cleaning device may be a buoyant cleaning device configured to be moved along the inlet section, between the hose end stopper and the distal end stopper by movement of the surrounding water.

The buoyant cleaning device advantageously cleans the water inlet without the need for external access, power, or replacement. The buoyant cleaning device uses the movement of the waves and tide to ensure that the water inlet remains clean and in working order.

The cleaning device may be a toroid. Advantageously, the toroid cleaning device may fit flush with the water inlet.

The pump and the water inlet may be arranged adjacent each other.

The position of the pump, water inlet and float switch may advantageously ensure that the apparatus is not active at low tide and that the pump is positioned as far away from the seabed as possible, while still providing a working system. This helps to protect the pump from damage due to silt and other debris.

According to a second example, there is provided a method of delivering water to an offshore structure using a water delivery apparatus, the method comprising: controlling, by a controller, the water delivery apparatus to switch from a standby mode to a ready mode; controlling, by the controller, a pump, located along a hose, from an off state to an on state; pumping, by the pump, water from a water inlet located towards the first end of the hose, to a plurality of nozzles distributed along the hose, such that water is delivered to at least part of said offshore structure.

The above invention provides a method of delivering water to an offshore structure with improved cleaning ability. The method is capable of automatically cleaning key areas of an offshore structure without the need for manual cleaning. The method also prevents the build-up of bird guano by being activatable at various times of day and night, every day of the year. The method has a reduced risk to birds, is pollution free and helps to alleviate interruptions to operations. The method will function regardless of sea conditions, thus lack of access due to rough seas is not a problem. The method requires minimal maintenance and is cheaper to run than existing systems. By reducing the build-up of bird guano, the working conditions for offshore technicians are dramatically improved.

According to a third example, there is provided a water inlet for a water delivery apparatus for an offshore structure. The water inlet comprises an inlet section, wherein the inlet section comprises a plurality of apertures sized to allow the ingress of water and prevent the ingress of unwanted material. The water inlet further comprises a hose connection end for connection of a hose and a distal end. The water inlet further comprises a hose end stopper positioned towards the hose connection end and at one end of the inlet section, and a distal end stopper positioned towards the distal end and at one other end of the inlet section. The water inlet comprises a cleaning device configured to prevent the build-up of aggregates on the inlet section. The cleaning device is a buoyant cleaning device configured to be moved along the inlet section, between the hose end stopper and the distal end stopper by movement of the surrounding water.

The water inlet allows water to enter the apparatus while stopping large foreign objects such as living organisms, and particulates such as silt. The cleaning device may advantageously stop marine growth growing on the inlet section, thus ensuring that the flow of water remains free and open. The buoyant cleaning device advantageously cleans the water inlet without the need for external access, power or replacement. The cleaning device uses the movement of the waves and tide to ensure that the water inlet remains clean and in working order.

Each of the plurality of apertures may have a diameter of between 0.5mm and 10mm, preferably between 1mm and 5mm, more preferably between 2mm and 4mm, most preferably 3mm.

The sizing of the apparatus may further improve the efficacy of the inlet to stop matter other than water entering the system.

The water inlet may be a prismatic shape. The cleaning device may be a toroid. Advantageously, the toroid cleaning device may fit flush with the water inlet.

All of the features contained herein may be combined with any of the above aspects, in any combination.

Although a few preferred embodiments of the present invention have been shown and described, it will be appreciated by those skilled in the art that various changes and modifications might be made without departing from the scope of the invention, as defined in the appended claims.

### BRIEF DESCRIPTION OF DRAWINGS

For a better understanding of the invention, and to show how embodiments of the same may be carried into effect, reference will now be made, by way of example only, to the accompanying diagrammatic drawings in which:
Figure 1 shows an example of a water delivery apparatus and an offshore structure, when the water delivery apparatus is in a standby mode and a pump of the water delivery apparatus is in an off state,
Figure 2 shows an example of a water delivery apparatus and an offshore structure, when the water delivery apparatus is in a ready mode and a pump of the water delivery apparatus is in an off state,
Figure 3 shows an example of the water delivery apparatus and an offshore structure, when the water delivery apparatus is in a ready mode and a pump of the water delivery apparatus is in an on state,
Figure 4 shows a top-down cross-sectional view of an example of the water delivery apparatus and an offshore structure, when the pump of the water delivery apparatus is in an off state,
Figure 5 shows a top-down cross-sectional view of an example of the water delivery apparatus and an offshore structure, when the pump of the water delivery apparatus is in an on state,
Figure 6 shows a further example of the water delivery apparatus and an offshore structure, when the pump is in an off state,
Figure 7 shows a concentrated view of an example of the water delivery apparatus, focussing on a water inlet,
Figure 8a shows a concentrated view of an example of the water delivery apparatus, focussing on a water inlet, with a cleaning device in a first position,
Figure 8b shows a concentrated view of an example of the water delivery apparatus, focussing on a water inlet, with the cleaning device in a second position; and
Figure 9 shows an example of a flow chart method of delivering water to an offshore structure.

### SPECIFIC DESCRIPTION OF EMBODIMENTS

An apparatus and method of the present disclosure is described below.

In particular, the present disclosure is concerned with a water delivery apparatus for an offshore structure and method thereof.

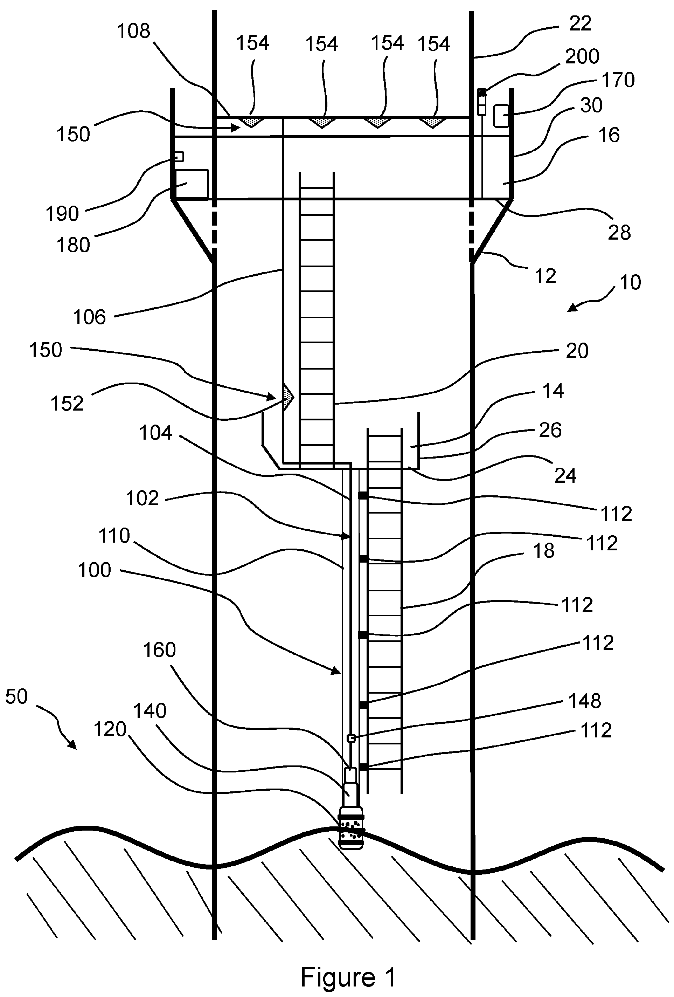

Figure 1 shows an example of a water delivery apparatus 100 for an offshore structure 10. The offshore structure 10 may be an offshore wind turbine, for example a fixed foundation, jacket foundation, gravity based, or floating wind turbine. The offshore structure 10 may comprise a foundation, a transition piece 12 and a body 22, amongst other features. The body 22 may be a monopile body, for example, a tower. Alternatively, the offshore structure 10 may be a substation, energy island or other offshore structure.

As shown in figure 1, the offshore structure 10 may comprise a first stage ladder 18 for allowing access to the structure 10 from a vessel. The first stage ladder 18 may provide access to a first stage platform 14. The first stage platform 14 may comprise a first stage platform floor 24 and a first stage platform railings 26. The first stage platform 14 may provide access between the first stage ladder 18 and a second stage ladder 20. The second stage ladder 20 may provide access between the first stage platform 14 and a second stage platform 16. The second stage platform 16 may comprise a second stage platform floor 28 and a second stage platform railings 30. The second stage platform 16 may provide access to the monopile body 22, for example, via a ladder and door (not shown).

The first stage platform 14 and second stage platform 16 may form part of the transition piece 12 of the offshore structure 10.

The water delivery apparatus 100 is suitable for an offshore structure 10, such as the offshore structure 10 shown in figure 1. The water delivery apparatus 100 may be a water delivery system and/or a bird deterrent system and/or a cleaning system or apparatus. The water delivery apparatus 100 comprises a hose 102. The hose 102 comprises a water inlet 120 towards a first end of the hose 102. The water delivery apparatus 100 further comprises a pump 140 located along the hose 102 and a plurality of nozzles 150 distributed along the hose 102 for delivering water. The water delivery apparatus 100 further comprises a controller 180 configured to control the pump 140 between an on and an off state, wherein in the on state, the pump 140 is configured to draw water through the water inlet 120 to deliver said water to the plurality of nozzles 150. The plurality of nozzles 150 are positioned such that the delivered water cleans at least part of said offshore structure 10.

The components of the water delivery apparatus 100 may be connected to and powered by a power supply installed at and for the offshore structure 10.

The hose 102 may be suitable for the transport of water under high pressure. The hose 102 may comprise rubber, plastic, metal, thermoplastic, polyvinyl chloride (PVC), polyurethane, stainless steel braid, woven fabric, or a combination thereof. The hose 102 may comprise a plurality of smaller hose sections. The hose sections may be connected by quick release fittings such as cam operated couplings. This may ensure that the hose 102 is quick and easy to assemble offshore, if required.

The hose 102 may extend from at or below a water level 50 to a height above the water level 50 on the offshore structure 10. The hose 102 may comprise a lower hose section 104 and an upper hose section 106, 108. The lower section 104 of the hose 102 may extend from at or below the water level 50 to the first stage platform 14. That is, the lower section 104 may be a part of the hose 102 that is most susceptible to salt from the water. The lower section 104 of the hose 102 may be positioned alongside the first stage ladder 18.

The hose 102 may be connected to the offshore structure 10 by fixings (not shown). The fixings may be distributed along the hose 102. The fixings may be clamps, clips, ties, magnets, or the like. In some examples, only the upper section of the hose 106, 108 is connected to the offshore structure 10 by the fixings. The hose 102 may be removably attached to the offshore structure 10.

The lower section 104 of the hose 102 may be encased in a protective casing 110. The protective casing 110 may be attached to the first stage ladder 18. The attachment between the protective casing 110 and the first stage ladder 18 may be provided by one or more brackets (not shown), for example metal or plastic brackets. The brackets may comprise two components configured to surround the protective casing 110 and at least a part of the first stage ladder 18, for example a side rail. The two components may be connectable by a screw or pin and may be adjustable. The two components of the bracket may be two c-shaped components, configured to match the profile of the protective casing 110 and a side rail of the first stage ladder 18. Alternatively, or in addition, the protective casing 110 may be attached to the first stage ladder 18 by one or more tensioning devices such as a ratchet and strap device. The protective casing 110 may be attached directly to the first stage ladder 18, for example, using welded fixing points.

The protective casing 110 may be a cylindrical casing. The protective casing 110 may have a diameter of between 100mm and 300mm, preferably between 140mm and 220mm, more preferably between 160mm and 200mm.

One or more spacers 112 may be provided between the protective casing 110 and the first stage ladder 18, such that the protective casing 110 is attached at a fixed distance from the first stage ladder 18. Alternatively, the protective casing 110 may be attached, directly or with spacers 112, to the offshore structure 10, for example to the transition piece 12 of the offshore structure 10. The protective casing 110 may also house the pump 140, as explained in more detail below.

The spacers 112 may be made from nylon, polytetrafluoroethylene (PTFE), polyproylene (PP), an epoxy composite or the like. The spacers 112 may ensure that the protective enclosure is not crushed or deformed during installation or throughout its lifetime. The spacers 112 may be concave on one side such that, in the example where the protective casing 110 is cylindrical, the spacers 112 fit flush with the protective casing 110. The spacers 112 may be a biconcave shape, such that the spacers 112 fit flush with the side rail of the first stage ladder 18. The concave edges of the spacers 112 may have different levels of curvature from one another, as required.

The pump 140 may be a submersible pump, a jet pump, a centrifugal pump, a positive displacement pump, or the like. For example, the pump 140 may be a bore hole pump, in particular a submerged bore hole pump. The pump 140 may be, for example, a single-phase, 110 volt single phase or three phase pump 140. The pump 140 is capable of delivering water from the sea, through the water inlet 120, to the plurality of nozzles 150.

The pump 140 is configured to deliver water to at least part of the offshore structure 10. The pump 140 may have a rating of between 50kPa and 1000kPa, preferably between 100kPa and 800kPa, more preferably between 200kPa and 600kPa, more preferably still between 250kPa and 500kPa, most preferably, between 300kPa and 450kPa, for example 400kPa.

The pump 140 may be located adjacent the water inlet 120. That is, the pump 140 may be located towards one end of the hose 102. The pump 140 may connect the water inlet 120 to the hose 102. Alternatively, there may be a section of hose 102 between the pump 140 and the water inlet 120.

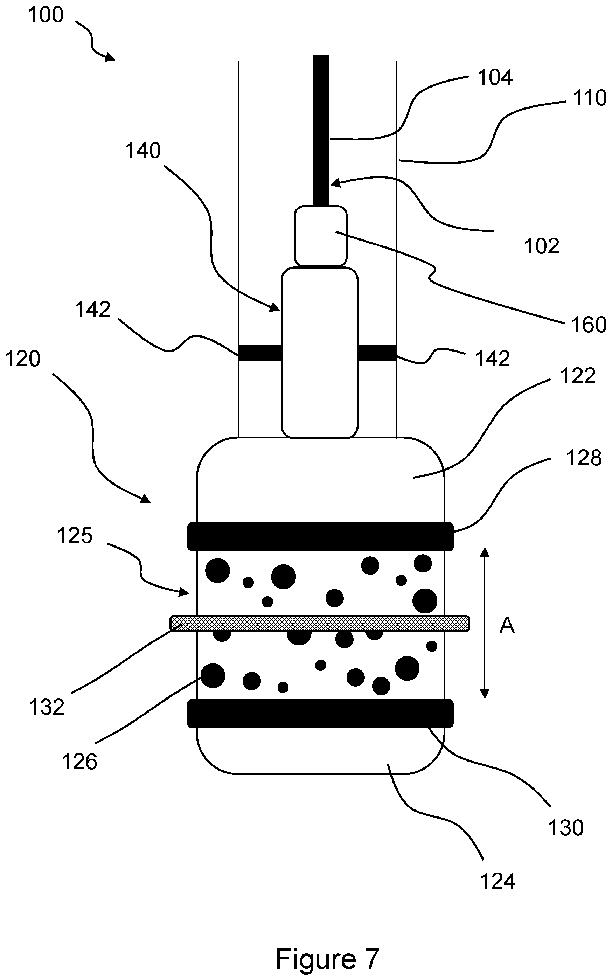

The pump 140 may be housed within the protective casing 110. The pump 140 may be held in place within the protective casing 110 by a pump spacer 142, as shown in figure 7. The pump spacer 142 may be a single pump spacer 142. Alternatively, there may be a plurality of pump spacers 142. The pump spacer 142 is configured to suspend the pump 140 in situ within the protective casing 110. The pump spacer 142 may extend around the pump 140 and fill the circumferential space between the pump 140 and the protective casing 110. That is, the pump spacer 142 may be a toroid. The pump spacer 142 may have one or more projections and/or protrusions configured to fit with the pump 140 and the casing 110.

As shown in Figure 1, the water delivery apparatus 100 may comprise a float switch 160. The float switch 160 may be configured to detect when a sea level 50 is above or below a pre-determined threshold. The float switch 160 may be located adjacent the pump 140. The float switch 160 may be integral with the pump 140. The float switch 160 may be configured to detect when the pump 140 is completely submerged in water. Therefore, the float switch 160 may be located directly above the pump 140, or, when integral to the pump 140, at a most upper end of the pump 140. That is, when the float switch 160 is fully submerged by water, the pump 140 is fully submerged by the water. In figure 1, the sea level (or water line) is below the float switch 160.

The float switch 160 may comprise a float, magnet, reed switch, or the like, that automatically opens and closes depending on the sea level 50. Therefore, the float switch 160 may detect when the sea level 50 is above a certain level. The float switch 160 may be located within the protective casing 110.

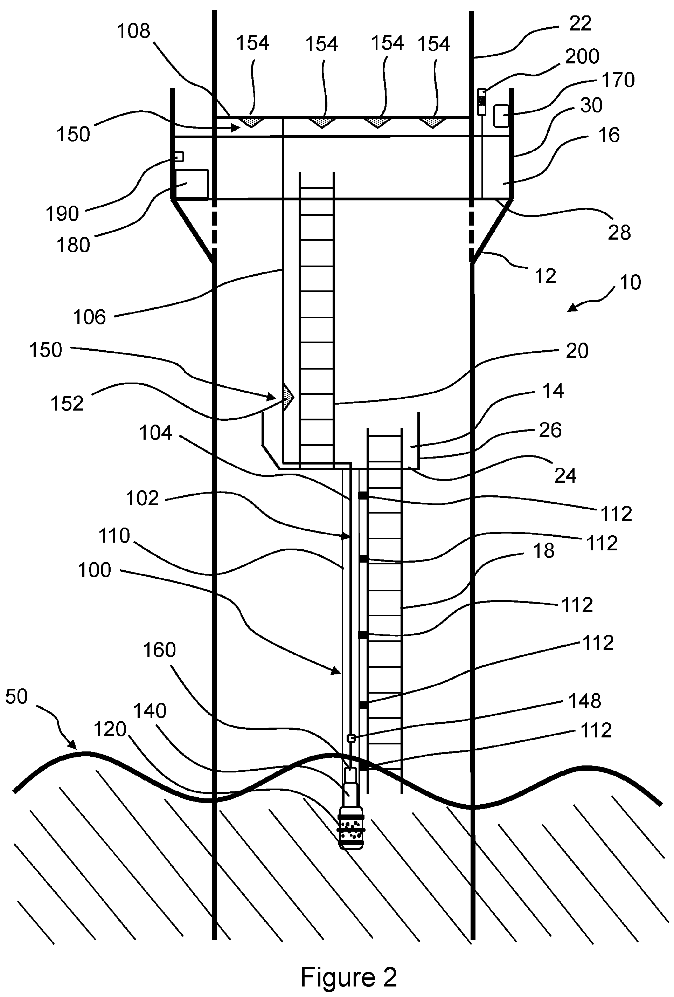

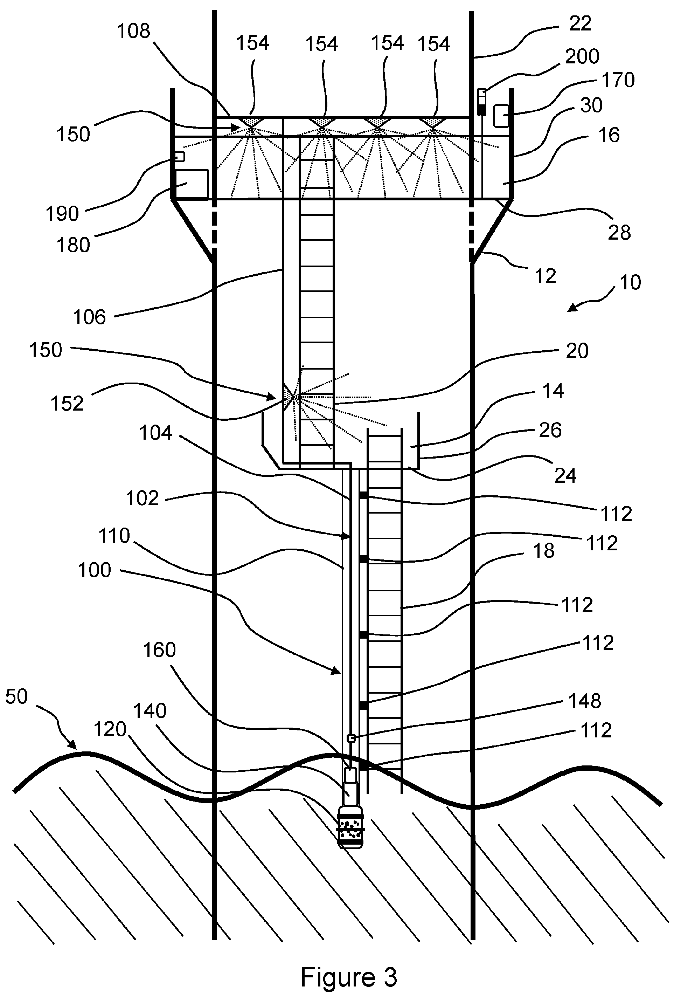

The float switch 160 may, upon detecting that the sea level 50 is above or below a predetermined level (i.e. upon switching between an open and closed state) deliver a signal to the controller 180 indicating such a state change. That is, if the float switch 160 detects that the sea level 50 is high enough to fully submerge the float switch 160, and therefore the pump 140, the float switch 160 may send a signal to the controller 180 to indicate as such (for example, as shown in figures 2 and 3). Similarly, if the float switch 160 detects that the sea level 50 low enough such that the float switch 160 is not fully submerged, and therefore the pump 140 may not be submerged, the float switch 160 may send a signal to the controller 180 to indicate as such (as shown in figure 1).

The float switch 160 may have a preset time delay before sending a signal to the controller 180. For example, the float switch 160 may only send a signal to the controller 180 when the change of state of the float switch 160 is constant for more than one minute or two minutes or three minutes, for example. This ensures that the float switch 160 does not send a signal to the controller 180 every time a wave activates the float switch 160. Alternatively, or additionally, this delay or calculation may be done by the controller 180, as explained in more detail below.

In some embodiments, there may be a plurality of float switches 160. In this case, one or more float switches 160 may act as back-ups to the main float switch 160.

In some embodiments, no float switch 160 is present. In this example, the apparatus 100 (e.g. the controller 180) may be pre-programmed with information such as local tide times. The pre-determined threshold may be replaced with a certain time period around the high tides.

The controller 180 may be located inside the offshore structure 10. Alternatively, the controller 180 may be located outside of the offshore structure 10. The controller 180 may be located alongside, or be integral with, other components of the offshore structure 10. The controller 180 is configured to control the water delivery apparatus 100. The controller 180 may be a programmable logic controller (PLC), programmable automation controller (PAC), distributed control system (DSC), a computational device running software or the like. The controller 180 may be physically present on the offshore structure 10 or may be a remote controller. The controller 180 may also be present on handheld devices or personal devices, or connectable and communicable with said devices. The controller 180 may comprise wired or wireless connections to the various components of the water delivery apparatus 100.

The controller 180 is configured to switch the water delivery apparatus 100 between a standby mode and a ready mode. When the water delivery apparatus 100 is in the standby mode, the controller 180 cannot activate the pump 140 to the on state. If the water delivery apparatus 100 is switched from the ready mode to the standby mode (because of any of the actions detailed below), then, if the pump 140 was in the on state, the controller 180 may automatically switch the pump 140 from the on state to the off state. That is, when the pump 140 is in the on state, the controller 180 is configured to automatically control the pump 140 to switch to the off state, in response the water delivery apparatus 100 switching from the ready mode to the standby mode.

The controller 180, may be configured to, in response to the float switch 160 detecting that the sea level 50 is above a predetermined threshold, control the water delivery apparatus 100 to be in a ready mode. The controller 180, may be configured to, in response to the float switch 160 detecting that the sea level 50 is below a predetermined threshold, control the water delivery apparatus 100 to be in the standby mode. That is, the controller 180 may be configured to switch the water delivery apparatus 100 to the ready mode in response to the float switch 160, and therefore the pump 140, being fully submerged. Similarly, the controller 180 may be configured to switch the water delivery apparatus 100 to the standby mode in response to the float switch 160, and therefore the pump 140, not being fully submerged. The float switch 160 may be positioned such that water delivery apparatus 100 will be in a ready mode when the sea surrounding the offshore structure 10 is at or near high tide or sufficiently far from a low tide. The float switch 160 may be positioned such that water delivery apparatus 100 will be in the standby mode when the sea surrounding the offshore structure 10 is at or near low tide.

The controller 180 may be configured to control the water delivery apparatus 100 to be in the ready mode or the standby mode based on local tide times. That is, the float switch 160 may not be present, instead the controller 180 may receive or be pre-programmed with the local tide times, such that the water delivery apparatus 100 is only controlled to be in the ready mode at high tide. When it is not high tide, the water delivery apparatus 100 may be controlled to be in the standby mode.

As explained above, there may be a delay between the float switch 160 switching state and the controller 180 switching the state of the water delivery apparatus 100. That is, the controller 180 may be configured to, upon receiving a signal from the float switch 160 to indicate that the float switch 160 is fully submerged, delay for a preset time period (for example, one minute or two minutes or three minutes, and so on) before switching the state of the water delivery apparatus 100 to the ready mode. If, within this preset time period the controller 180 receives one or more further signals from the float switch 160, this may indicate that waves are causing the float switch 160 to activate, and therefore the controller 180 will not switch the state of the water delivery apparatus 100. That is, if the controller 180 receives a further signal from the float switch 160, within the preset time period, the controller 180 will reset the timer, such that the preset time period starts again. If the water delivery apparatus 100 is in the ready mode, and the controller 180 receives a signal from the float switch 160 to indicate that the float switch 160 is not fully submerged, then the controller 180 may immediately control the water delivery apparatus 100 to switch to the standby mode. That is, the controller 180 will not delay in switching the water delivery apparatus 100 from the ready mode to the standby mode if the float switch 160 is no longer submerged. This ensures that the pump 140 is not activated when the pump is not fully submerged.

Alternatively, the float switch 160 may be configured to implement the delay. That is, when the float switch 160 is fully submerged, an internal timer may activate (for example, one minute or two minutes or three minutes, and so on). If the time period passes without the sea level 50 causing the float switch 160 to become unsubmerged, the float switch 160 sends a signal to the controller 180 to switch the state of the water delivery apparatus 100 to the ready mode. If, during the time period, the float switch 160 becomes unsubmerged, the float switch 160 will not send a signal to the controller 180 to switch the state of the water delivery apparatus 100 to the ready mode.

The water delivery apparatus 100 may further comprise a temperature sensor 190. The temperature sensor 190 may be located at or towards the second stage platform 16 of the offshore structure 10. There may be one or more temperature sensors 190, located at different positions on the offshore structure 10 and/or as part of one of the other components of the water delivery apparatus 100. The temperature sensor 190 may be configured to send a signal to the controller 180 based on the determined temperature. For example, the temperature sensor 190 may send a signal to the controller 180 to indicate that the temperature is above or below a predetermined temperature. For example, the predetermined temperature may be 0 degrees Celsius (273.15 Kelvin), 0.5 degrees Celsius (273.55 Kelvin), 1 degree Celsius (274.15 Kelvin), 2 degrees Celsius (275.15 Kelvin), 3 degrees Celsius (276.15 Kelvin), 4 degrees Celsius (277.15 Kelvin), 5 degrees Celsius (278.15 Kelvin), or a value of a range between, above or below any of these values. The controller 180 may be configured to switch the water delivery apparatus 100 to the standby mode based on the temperature sensor 190 sensing a temperature below the predetermined temperature. If the temperature sensor 190 detects a temperature below the predetermined temperature, the temperature sensor 190 may periodically send a signal to the controller 180 such that the controller 180 cannot not switch the water delivery apparatus 100 to the ready mode until the temperature sensor 190 indicates that the temperature is above the predetermined temperature, or the temperature sensor 190 ceases to send the signal indicating that the temperature is below the predetermined temperature.

The controller 180 is configured to control the pump 140 to move between different states. In the standby mode (of the water delivery apparatus 100), the controller 180 may be controllable to control the pump 140 to be in the off state - this can be seen in figure 1. In the ready mode (of the water delivery apparatus 100), the controller 180 may be controllable to control the pump 140 to be in the on state (figure 3) and the off state (figure 2). That is, when the water delivery apparatus 100 is in the standby mode, the pump 140 may not be activated (i.e. switched to the on state). Instead, when the water delivery apparatus 100 is in the standby mode, the pump 140 may only be deactivated (i.e. switched to the off state). When the water delivery apparatus 100 is in the ready mode, the pump 140 may be activated or deactivated (i.e. the pump 140 may be switched between the on state and the off state).

When the water delivery apparatus 100 is in the ready mode, the controller 180 may be configured to control the pump 140 to periodically switch between the on state and the off state. When the water delivery apparatus 100 is in the ready mode, the controller 180 may be configured to control the pump 140 to switch between the on state and the off state based on an external signal. For example, the controller 180 may be configured to receive a remote signal from a fob, personal device, control centre, or the like. When the water delivery apparatus 100 is in the ready mode, the controller 180 may be configured to control the pump 140 to switch between the on state and the off state based on the current time. For example, the controller 180 may be configured to switch the pump 140 to the on state during nighttime hours. For example, between 6pm and 6am local time, preferably between 10pm and 6am, preferably between 11pm and 5am, more preferably between 12am and 4am, for example between 1am and 3am. That is, the controller 180 may be configured to only activate the pump 140 when there are likely to be no crew working on the offshore structure 10.

The controller 180 may be configured to control the pump 140 to be in the on state for only a predetermined length of time. For example, the controller 180 may be configured to, once the pump 140 has been switched to the on state, automatically switch the pump 140 to the off state after a predetermined length of time from the on state being activated. The predetermined length of time could be between one minute and 120 minutes, preferably between five minutes and 90 minutes, more preferably between 15 minutes and 70 minutes, for example, 30 minutes or 60 minutes. If, during the predetermined length of time, the controller 180 is controlled to switch the water delivery apparatus 100 from the ready mode to the standby mode, the controller 180 may automatically control the pump 140 to switch from the on state to the off state, regardless of the elapsed time.

That is, the controller 180 may be configured to switch the pump 140 to the on state for a predetermined amount of time during the specified hours. The controller 180 may be configured to switch the pump 140 to the on state a maximum number of times over a given period. The controller 180 may be configured to leave a minimum amount of time between two switching events. For example, the controller 180 may be configured to wait at least between three months and 12 hours between two instructions to switch the pump 140 to the on state. The time between switches to the on state may be between six hours and 23 hours, preferably between 12 hours and 22 hours, more preferably between 16 hours and 21 hours, for example, 20 hours. The controller 180 may be programmable to wait any of the time periods above, as well as a specific number of hours, days, weeks or months. The controller 180 may be configured to switch the pump 140 to the on state a maximum number of times over a given period; for example, once, twice or three times in a 24- or 48-hour period.

In this situation, for example, providing that the water delivery apparatus 100 is in the ready state, the controller 180 may activate the pump 140 (switch to the on state) for a period of 15 minutes at 7pm before controlling the pump 140 to switch to the off state. The controller 180 may, after a minimum wait time of 4 hours, and providing that the water delivery apparatus 100 is in the ready state, activate the pump 140 to switch to the on state for a period of 15 minutes; this may be at 5am, for example. In order for the controller 180 to successfully switch the pump 140 from the off state to the on state, the water delivery apparatus 100 must be in the ready mode.

That is, in the above example, at 11pm and 4am the temperature sensor 190 is sensing a temperature above the predetermined temperature, the float switch 160 is indicating that it is fully submerged, and no remote signal to switch the water delivery apparatus 100 from the ready mode to the standby mode has been received from any external devices.

The apparatus 100 may further comprise an alarm (not shown) configured to sound prior to the pump 140 entering the on state. This alarm may produce an audible sound that is unpleasant to birds, thus deterring them from the offshore structure prior to activation of the pump 140.

The water delivery apparatus 100 may comprise a motion detector 170. The motion detector 170 may be located at or towards the first stage platform 14 or the second stage platform 16 (as shown in figure 1). The water delivery apparatus 100 may comprise a plurality of motion detectors 170. For example, there may be a motion detector 170 at or towards the first stage platform 14 and a motion detector 170 at or towards the second stage platform 16. The motion detector 170 may be configured to detect the presence of a bird. Upon detection of the presence of a bird, the motion detector 170 may send a signal to the controller 180. If water delivery apparatus 100 is in the ready mode, the controller 180 will control the pump 140 to switch to the on state for a predetermined length of time.

The controller 180 may control the pump 140 based on any combination of the above factors and conditions.

The water delivery apparatus 100 may comprise an indicator 200, as shown in figure 1. The indicator 200 may indicate whether the water delivery apparatus 100 is in the standby mode (e.g. figure 1) or the ready mode (e.g. figures 2 and 3) , and whether the pump 140 is in the on state (e.g. figure 3) or the off state (e.g. figures 1 and 2). The indicator 200 may be located at or towards the second stage platform 16, as shown in the figures. The indicator 200 may be located at any position such that it is visible to a crew approaching the offshore structure 10. In some examples, there are multiple indicators 200. The indicator 200 may comprise a visual indication, such as coloured lights or wording. The indicator 200 may have three different coloured lights, indicating the status of the water delivery apparatus 10. For example, a green light may indicate that the apparatus 100 is in the standby mode (i.e. that it is safe for crew to approach). An amber light may indicate that the apparatus 100 is in the ready mode and the pump 140 is in the off state (i.e. that the pump 140 of the apparatus 100 could activate to the on state and that crew should move control the controller 180 to the apparatus 100 to the standby mode before approaching). A red light may indicate that the apparatus 100 is in the ready mode, and that the pump 140 is in the on state (i.e. that the pump 140 is pumping water through the nozzles 150 and that the crew should not board the offshore structure 10 without first deactivating the apparatus 100; that is, switching the water delivery apparatus 100 from the ready mode to the standby mode, thus switching the pump 140 from the on state to the off state). The indicator 200 may have other coloured lights indicating the stages or may present wording such as 'standby' (to indicate that the water delivery apparatus 100 is in the standby mode), 'ready' (to indicate that the water delivery apparatus 100 is in the ready mode and that the pump 140 is in the off state) and 'active' (to indicate that the water delivery apparatus 100 is in the ready mode and that the pump 140 is in the on state).

The indicator 200 may be remote to the offshore structure 10, and/or be part of a personal or handheld device or fob used by a crew member. The indicator 200 may also be present on or deliver the status to a vessel.

In use, the temperature sensor 190 may detect a temperature of above the predetermined temperature (e.g. 1 degree Celsius) and the float switch 160 may determine that the water level 50 is above a predetermined height (i.e. the float switch 160 is activated) for longer than a predetermined time (e.g. two minutes) therefore allowing the controller 180 to switch the water delivery apparatus 100 from the standby mode to the ready mode. In this case, the indicator 200 would switch from the standby indication to the ready indication. The pump 140 of the water delivery apparatus 100 may then be activated by a remote manual activation (e.g. a fob, control panel or remote controller) or by a timer set to activate (switch to the on state) at a certain time (e.g. during non-working hours or nighttime). In this case, the indicator 200 would switch from the ready indication to the active indication. The water delivery apparatus 100 will then be in the active mode (the pump 140 in the on state) for a predetermined length of time (e.g. one hour) and will automatically deactivate the apparatus (i.e. the controller 180 will control the pump 140 to switch from the on state to the off state, thereby placing the water delivery apparatus 100 in the ready mode). In this case, the indicator 200 would switch from the active indication to the ready indication. The controller 180 may also cause the apparatus 100 to deactivate in response to a remote manual deactivation (e.g. a fob, control panel or remote controller). This will cause the indicator 200 to switch from the active indication to the ready indication. The controller 180 may also cause the apparatus 100 to deactivate in response to the float switch 160 indicating that the water level 50 has dropped below the predetermined height, or in response to the temperature sensor 190 sensing a temperature of below the predetermined temperature. This will cause the indicator 200 to switch from the active indication to the standby indication. Deactivation of the apparatus (either through the predetermined length of time ending, a manual deactivation though a fob, control panel or remote controller, or in response to signals from the temperature sensor 190 or the float switch 160) may cause the predetermined time interval between activations of the controller 180 to reset. In some examples, only a signal indicating that the water level 50 has dropped below the required level, from the float switch 160, will cause this reset.

The water delivery apparatus 100 may comprise a one-way valve 148 (e.g. a non-return valve or check valve). The one-way valve 148 may be integral with the pump 140. That is, the pump 140 may comprise the one-way valve 148. Alternatively, the one-way value 148 may be distinct from the pump 140 and located adjacent the pump 140. The one-way valve 148 may be located along the hose 102 as part of or separate from the pump 140. When the one-way valve 148 is part of the pump 140, the one-way value 148 is the last part of the pump 140 that the water passes through when the pump 140 is in the on state. When the pump 140 is in the off state, the one-way valve 148 is closed, therefore preventing water from flowing back through the pump 140, due to gravity.

The one-way value 148 may comprise a drainage hole. The drainage hole may be between 1mm and 10mm in circumference, preferably between 2mm and 6mm, more preferably between 3mm and 5mm, for example, 4mm. The drainage hole may be configured to allow water to flow out of the apparatus 100 due to gravity, when the pump 140 is in the off state.

The hose 102 of the water delivery apparatus 100 comprises a plurality of nozzles 150. The apparatus may comprise more than three nozzles 150, preferably more than 5 nozzles 150, more preferably more than 10 nozzles, most preferably around 20 nozzles. The nozzles 150 are distributed along the hose 102. When the pump 140 is in the off state, water is not drawn through the water inlet 120, along the hose 102 and to the nozzles 150. When the pump 140 is in the on state, water is drawn in through the water inlet 120, along the hose 102 and out through the nozzles 150. Figure 3 shows an example of the water delivery apparatus 100 and the offshore structure 10 when the pump 140 is in the on state. As shown in figure 3, water is delivered through the nozzles 150 to clean at least a section of the offshore structure 10.

At least two or more of the plurality of nozzles 150 may be located towards an opposite end of the hose 102 to the water inlet 120. The plurality of nozzles 150 may comprise two or more groups of nozzles 150 located away from each other. In some embodiments, at least one or more of the plurality of nozzles 150 may be located at or above the first or second stage platform (14, 16) of the offshore structure 10. For example, at least one or more of the plurality of nozzles 150 may be located at the first stage platform 14 and positioned and configured such that, when the pump 140 is in the on state, the high-pressure water is delivered to the floor 24 and railings 26 of the first stage platform 14. These one or more of the plurality of nozzles 150 may be the first stage nozzles 152. Similarly, at least one or more of the plurality of nozzles 150 may be located at the second stage platform 16 and positioned and configured such that, when the pump 140 is in the on state, the high-pressure water is delivered to the floor 28 and railings 30 of the second stage platform 16. These one or more of the plurality of nozzles 150 may be the second stage nozzles 154.

In other words, the plurality of nozzles 150 may comprise one or more lower nozzles 152 and one or more upper nozzles 154. The one or more lower nozzles 152 may be located at or towards a first stage platform 14 of the offshore structure 10 and the one or more upper nozzles 154 may be located at or towards a second stage platform 16 of the offshore structure 10.

The first stage nozzles 152 may be positioned between 0.5m and 4m vertically above the first stage platform floor 24, preferably between 1m and 3.5m, more preferably between 1.5m and 3m, more preferably between 1.75m and 2.5m for example, 2m. One or more of the first stage nozzles 152 may be aimed substantially vertically downwards, i.e. towards the first stage platform floor 24. Another one or more of the first stage nozzles 152 may be aimed substantially horizontally with respect to the first stage platform floor 24. One or more of the first stage nozzles 152 may be aimed between 0 degrees and 90 degrees with respect to the first stage platform floor 24, for example 45 degrees. One or more of the plurality of nozzles 150 (or first stage nozzles 152) may be configured to clean a section of the first stage ladder 18. That is, the first stage nozzles 152 may be positioned to clean a section of the first stage ladder 18, at least a section of the first stage platform floor 24 and at least a section of the first stage platform railings 26.

One or more of the plurality of nozzles 150 (for example, the second stage nozzles 154) may be positioned between 0.5m and 4m vertically above the second stage platform floor 28, preferably between 1m and 3.5m, more preferably between 1.5m and 3m, more preferably between 1.75m and 2.5m for example, 2m. One or more of second first stage nozzles 154 may be aimed substantially vertically downwards, i.e. towards the second stage platform floor 28. Another one or more of the second stage nozzles 154 may be aimed substantially horizontally with respect to the second stage platform floor 28. One or more of the second stage nozzles 154 may be aimed between 0 degrees and 90 degrees with respect to the second stage platform floor 28, preferably between 20 degrees and 75degrees, for example 60 degrees. One or more of the plurality of nozzles 150 (or second stage nozzles 154) may be configured to clean a section of the second stage ladder 20. That is, the second stage nozzles 154 may be positioned to clean a section of the second stage ladder 20, at least a section of the second stage platform floor 28 and at least a section of the second stage platform railings 30. The second stage nozzles 154 may be configured to clean an entrance (not shown) and entrance ladder (not shown) to the offshore structure.

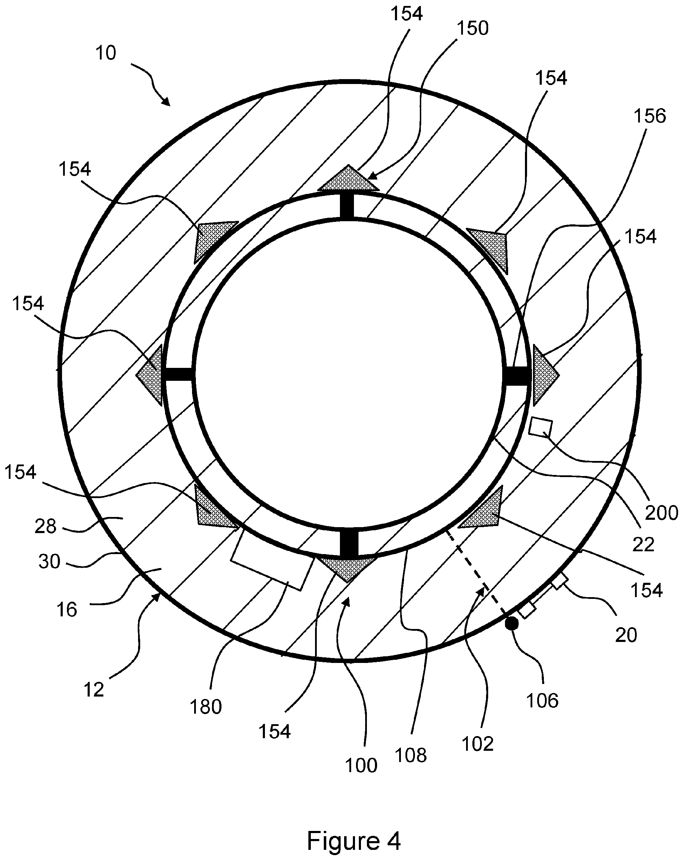

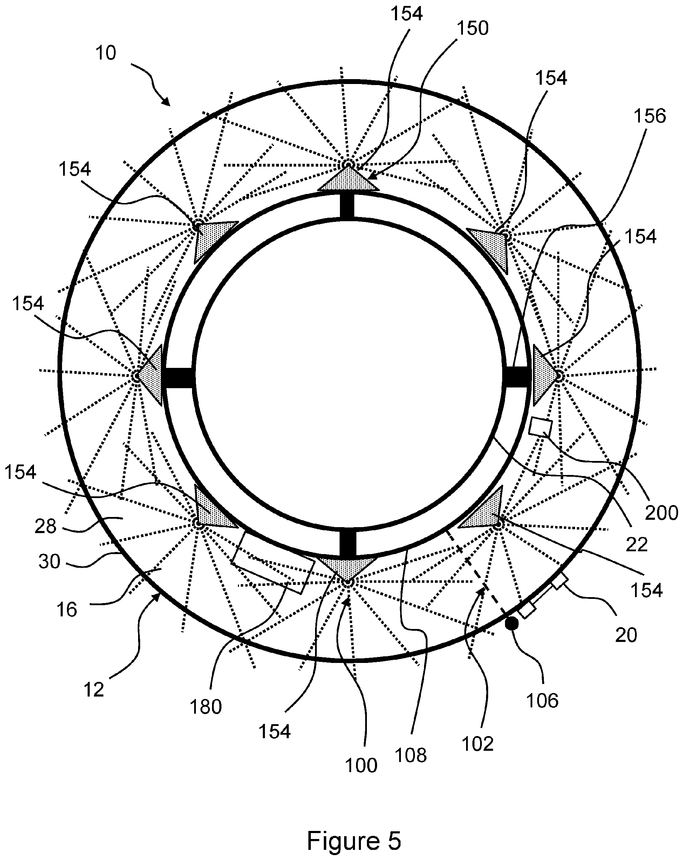

Figure 4 shows a top-down cross-sectional view of an example of the water delivery apparatus 100 and the offshore structure 10, when the pump 140 of the water delivery apparatus 100 is in an off state, and the nozzles 154 are not producing a high-pressure water spray. Figure 5 shows a top-down cross-sectional view of an example of the water delivery apparatus 100 and the offshore structure 10, when the pump 140 of the water delivery apparatus 100 is in an on state, and the nozzles 154 are producing a high-pressure water spray configured to clean at least a section of the offshore structure 10.

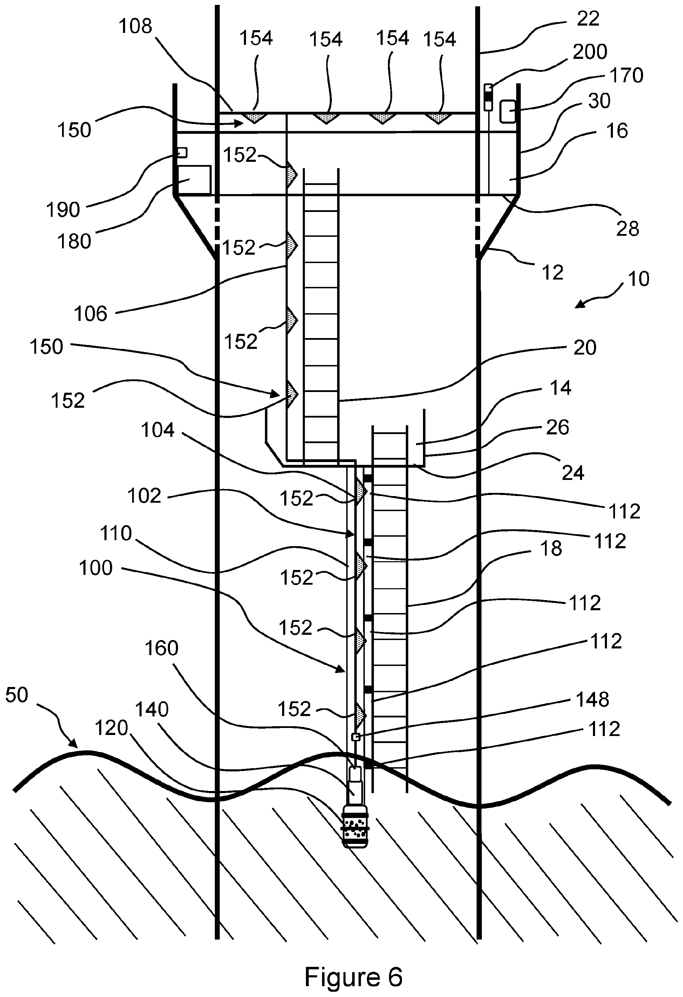

Other configurations of the nozzles 150 are shown in figure 6. Figure 6 shows the nozzles 150 continuously distributed along the hose 102, such that the first stage ladder 18 and the second stage ladder 20 are cleaned by the water delivery apparatus 100.

Each nozzle 150 of the plurality of nozzles 150 may have a spray angle of between 45 degrees and 155 degrees, preferably between 55 degrees and 135 degrees, more preferably between 70 and 110 degrees, most preferably between 60 and 90 degrees, for example, 75 degrees. The spray distribution of each nozzle 150 may be circular, a cone, a hollow cone, a ring, a spiral cone, solid stream, a mist, a fog, a fan, a flat fan or an elliptical spray, for example. The spray angle here may relate to the diameter of the spray distribution. That is, each of the plurality of nozzles 150 may comprise an outlet configured to produce one of a circular, conical or spiral shaped spray. The nozzles 150 may be static nozzles, movable nozzles, pulsing nozzles or adjustable nozzles. For example, the nozzles 150 may be rocker arm nozzles.

The nozzles 150 may be positioned at a height from the floor 24, 28 of the first or second stage platform 14, 16 such that the coverage of the water spray from each nozzle 150 is between 2m and 6m in diameter, preferably between 3m and 5m, for example, 4m. For example, this may be achieved by a nozzle with a 90-degree spray angle positioned 2m from the floor 24, 28.

The plurality of nozzles 150 are positioned such that the high-pressure water from each one of the plurality of nozzles 150 overlaps with the high-pressure water from at least one other of the plurality of nozzles 150. For example, the spray from each one of the second stage nozzles 154 (upper nozzles 154) may overlap with an adjacent one of the second stage nozzles 154. This can be seen in at least figure 5.

The plurality of nozzles 150 may be positioned a set distance from one another along the hose 102. For example, the second stage nozzles 154 (upper nozzles 154) may be distributed along the hose 102 at between 0.5m and 2.5m intervals, preferably between 1m and 2m intervals, for example 1.5m intervals. When the one or more first stage nozzles 152 (lower nozzles 152) are a plurality of first stage nozzles 152, the nozzles 152 may be distributed along the hose 102 at between 0.5m and 2.5m intervals, preferably between 1m and 2m intervals, for example 1.5m intervals. For example, the first stage nozzles 152 may comprise two nozzles 152 that are 1m apart.

The upper hose 106, 108 may comprise the second stage nozzles 154 (upper nozzles 154). The lower hose 104 may comprise the first stage nozzles 152 (lower nozzles 152).

Figure 7 shows a concentrated view of an example of the water delivery apparatus 100, focussing on a water inlet 120. The water inlet 120 is configured to allow the ingress of sea water into the water delivery apparatus 100. The water inlet 120 may comprise an inlet section 125. The water inlet 120 may comprise a hose connection end 122 for connection of the hose 102 and a distal end 124. The distal end 124 is the opposite end to the hose connection end 122. The water inlet 120 may comprise a one or more stoppers 128, 130. For example, the water inlet 120 may comprise a hose end stopper 128, positioned towards the host connection end 122 and at one end of the inlet section 125 and a distal end stopper 130 positioned towards the distal end 124 and at one other end of the inlet section 125.

The inlet section 125 may comprise a plurality of apertures 126. The plurality of apertures 126 may be in the form of a mesh, perforated screen, grid, uniform apertures, non-uniform apertures, filters, or the like. The apertures 126 may be sized to allow the ingress of water and to prevent the ingress of unwanted material, such as marine debris, biological material and/or sediment and particulate matter. For example, the diameter of each of the apertures 126 may be between 0.5mm and 10mm, preferably between 1mm and 5mm, more preferably between 2mm and 4mm, for example 3mm. In this sense, diameter may refer to the widest point of the aperture 126, regardless of the shape of the aperture 126.

The water inlet 120 may comprise a cleaning device 132 configured to prevent the build-up of aggregates on the inlet section 125. The cleaning device 132 may be buoyant cleaning device 132 configured to be moved along the inlet section 125, between the hose end stopper 128 and the distal end stopper 130 by movement of the surrounding water. That is, the cleaning device 132 may be held captive between the hose end stopper 128 and the distal end stopper 130. The buoyant cleaning device 132 may be configured to rise and fall with each wave of the surrounding sea water.

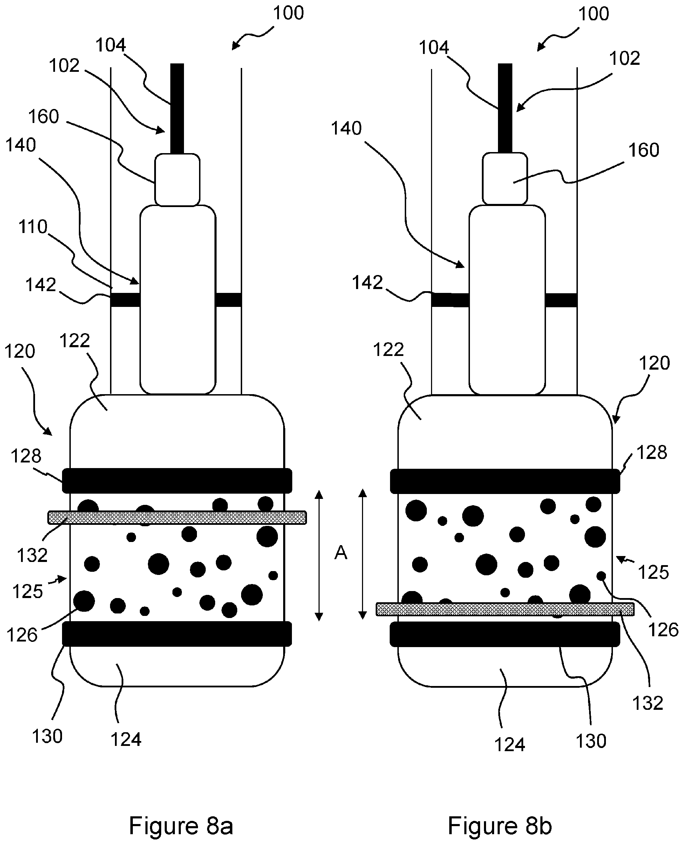

Figure 8a shows a concentrated view of an example of the water delivery apparatus 100, focussing on a water inlet 120, with the cleaning device 132 in a first position. Figure 8b shows a concentrated view of an example of the water delivery apparatus 100, focussing on a water inlet 120, with the cleaning device 132 in a second position. It will be understood that the two positions shown in figures 8a and 8b are representative, and that the cleaning device 132 may be configured to move freely between the hose end stopper 128 and the distal end stopper 130, as shown by the arrow A.

In some examples, the water inlet 120 (or the inlet section 125) is substantially elongated. For example, the water inlet 120 may be substantially prismatic, for example cylindrical. In this example, the cleaning device 132 may be a toroid or annulus. The cleaning device 132 may be shaped such that it stays substantially in contact with the inlet section 125 as it moves due to the water around it. In this way, the cleaning device 132 scrapes the surface of the inlet section 125 during the ebb and flow of each wave and the tide.

In some examples, there may be a plurality of water inlets 120. The plurality of water inlets 120 may have differing degrees of filtration.

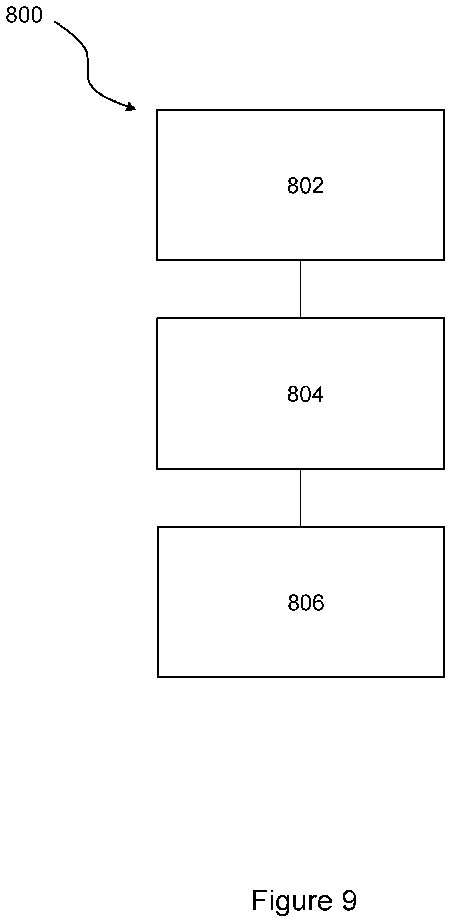

Figure 9 shows an example of a flow chart method of delivering water to an offshore structure 10 using the water delivery apparatus 100. The method 800 comprises a step 802 of controlling, by the controller 180, the water delivery apparatus 100 to switch from the standby mode to the ready mode. The method comprises a step 804 of controlling, by the controller 180, the pump 140, located along a hose 102, from the off state to the on state. The method comprises a step 806 of pumping, by the pump 140, water from the water inlet 120 located towards the first end of the hose 102, to the plurality of nozzles 150 distributed along the hose 102, such that water is delivered to at least part of said offshore structure 10.

The method 800 may comprise the further step of, in response to the water delivery apparatus 100 switching from the ready mode to the standby mode, automatically controlling, by the controller 180, the pump 140 to switch to the off state. The method 800 may comprise the further step of, in response the temperature sensor 190 sensing a temperature below a predetermined level, controlling, by the controller 180, the water delivery apparatus 100 to switch to the standby mode.

The method 800 may further comprise the step of controlling, by the controller 180, an indicator 200 to indicate the status of the water delivery apparatus 100 and the pump 140.

The method 800 may further comprise the step of detecting, by a float switch 160, when the sea level 50 is above or below a pre-determined threshold and, in response to the float switch 160 detecting that the sea level is above a predetermined threshold, controlling, by the controller 180, the water delivery apparatus 100 to be in the ready mode, and, in response to in response to the float switch 160 detecting that the sea level 50 is below a predetermined threshold, controlling, by the controller 180, the water delivery apparatus 100 to be in the standby mode.

The method 800 may further comprise the step of the controller 180 controlling the pump 140 to periodically switch between the on state and the off state. The method 800 may further comprise the step of the controller 180 controlling the pump 140 to switch between the on state and the off state based on an external signal and/or based on the current time.

The method 800 may further comprise the step of, when the pump 140 is switched to the on state, the controller 180 starting a timer, and, when the timer reaches a predetermined time, the controller 180 controls the pump 140 to switch from the on state to the off state.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A water delivery apparatus (100) for an offshore structure (10), the apparatus (100) comprising:
a hose (102) comprising a water inlet (120) towards a first end of the hose (102);
a pump (140) located along the hose (102) and configured to be switched between an on state and an off state;
a plurality of nozzles (150) distributed along the hose (102) for delivering water; and
a controller (180) configured to switch the water delivery apparatus (100) between a standby mode and a ready mode;
wherein, when the water delivery apparatus (100) is in the ready mode, the controller (180) is controllable to control the pump (140) to switch between the on state and the off state,
wherein, when the water delivery apparatus (100) is in standby mode, the controller (180) is controllable to control the pump (140) to switch to the off state,
wherein in the on state, the pump (140) is configured to draw water through the water inlet (120) to deliver said water to the plurality of nozzles (150); and
wherein the plurality of nozzles (150) are positioned such that the delivered water cleans at least part of said offshore structure (10).

2. The water delivery apparatus (100) according to claim 1, further comprising a temperature sensor (190), wherein the controller (180) is configured to switch the water delivery apparatus (100) to the standby mode, based on the temperature sensor (190) sensing a temperature below a predetermined level and wherein the controller (180) is configured to switch the water delivery apparatus (100) to the ready mode, based on the temperature sensor (190) sensing a temperature above a predetermined level.

3. The water delivery apparatus according to any of claims 1 and 2, further comprising a float switch (160) configured to detect when a sea level (50) is above or below a pre-determined threshold, and wherein the controller (180) is configured to, in response to the float switch (160) detecting that the sea level (50) is above a predetermined threshold, control the water delivery apparatus (100) to be in the ready mode, and wherein the controller (180) is configured to, in response to the float switch (160) detecting that the sea level (50) is below a predetermined threshold, control the water delivery apparatus (100) to be in the standby mode.

4. The water delivery apparatus (100) according to any of claims 1 to 3, wherein, when the pump (140) is in the on state, the controller (180) is configured to automatically control the pump (140) to switch to the off state in response the water delivery apparatus (100) switching from the ready mode to the standby mode.

5. The water delivery apparatus (100) according to any of the preceding claims, wherein, when the pump (140) is switched to the on state, the controller (180) is configured to start a timer, and, when the timer reaches a predetermined time, the controller (180) is configured to control the pump (140) to switch from the on state to the off state.

6. The water delivery apparatus (100) according to any of the preceding claims, wherein when the water delivery apparatus (100) is in the ready mode, the controller (180) is configured to control the pump (140) to periodically switch between the on state and the off state.

7. The water delivery apparatus (100) according to any of the preceding claims, wherein when the water delivery apparatus (100) is in the ready mode, the controller (180) is configured to control the pump (140) to switch between the on state and the off state based on an external signal.

8. The water delivery apparatus (100) according to any of the preceding claims, wherein when the water delivery apparatus (100) is in the ready mode, the controller (180) is configured to control the pump (140) to switch between the on state and the off state based on the current time.

9. The water delivery apparatus (100) according to any of the preceding claims, further comprising an indicator (200) to indicate whether the water delivery apparatus (100) is in the standby mode or the ready mode, and whether the pump (140) is in the on state or the off state.

10. The water delivery apparatus (100) according to any preceding claim, wherein the water delivery apparatus (100) comprises a one-way valve (148) located along the hose (102), wherein the one-way valve (148) comprises a drainage hole configured to allow water to flow out of the apparatus in accordance with gravity, when the pump (140) is in the off state.

11. The water delivery apparatus (100) according to any of the preceding claims, wherein at least one or more of the plurality of nozzles (150) are located at or above a platform (14, 16) of the offshore structure (10) and positioned such that the high-pressure water is delivered to a floor (24, 28) and/or railings (26, 30) of said platform (14, 16).

12. The water delivery apparatus (100) according to any of the preceding claims, wherein the offshore structure (10) is an offshore wind turbine, wherein the offshore wind turbine comprises a transition piece (12) and a monopile body (22), wherein at least a section of hose (102) is attached to the transition piece (12), and at least a section of the hose (102) is attached to the monopile body (22).

13. The water delivery apparatus (100) according to any of the preceding claims, wherein the water inlet (120) comprises an inlet section (125), wherein the inlet section (125) comprises a plurality of apertures (126) sized to allow the ingress of water and prevent the ingress of unwanted material and wherein the water inlet (120) comprises a cleaning device (132) configured to prevent the build-up of aggregates on the inlet section (125).

14. The water delivery apparatus (100) according to claim 13, wherein the water inlet (120) comprises:
a hose connection end (122) for connection of the hose (102),
a distal end (124),
a hose end stopper (128) positioned towards the host connection end (122) and at one end of the inlet section (125), and
a distal end stopper (130) positioned towards the distal end (124) and at one other end of the inlet section (125), and
wherein the cleaning device (132) is a buoyant cleaning device (132) configured to be moved along the inlet section (125), between the hose end stopper (128) and the distal end stopper (130) by movement of the surrounding water.

15. A method (800) of delivering water to an offshore structure (10) using a water delivery apparatus (100), the method (800) comprising:
controlling, by a controller (180), the water delivery apparatus (100) to switch from a standby mode to a ready mode;
controlling, by the controller (180), a pump (140), located along a hose (102), from an off state to an on state;
pumping, by the pump (140), water from a water inlet (120) located towards the first end of the hose (102), to a plurality of nozzles (150) distributed along the hose (102), such that water is delivered to at least part of said offshore structure (10).
